# EUROPÄISCHE PATENTSCHRIFT

(11) **EP 1 160 108 B1**
(45) Veröffentlichungstag und Bekanntmachung des Hinweises auf die Patenterteilung: **06.08.2003**
(21) Anmeldenummer: 00114824.6
(22) Anmeldetag: 11.07.2000
(51) Int. Cl.: B60G 21/05, B60B 35/02, C21D 9/02

(54) **Verbundlenkerachse**
Twist beam axle
Essieu à traverse déformable en torsion

(30) Priorität: 31.05.2000 DE 20009689 U
(43) Veröffentlichungstag der Anmeldung: 05.12.2001
(73) Patentinhaber: BENTELER AG, D-33104 Paderborn (DE)
(72) Erfinder: Gläser, Klaus, 33154 Salzkotten (DE); Etzold, Dieter, 33813 Oerlinghausen (DE); Christophliemke, Wigbert, 33758 Schloss Holte-Stukenbrock (DE)
(74) Vertreter: Bockermann, Rolf, Dipl.-Ing.

(56) Entgegenhaltungen:
- EP-A- 0 092 815
- EP-A- 0 681 932
- EP-A- 0 753 597
- EP-A- 0 788 903
- DE-C- 19 941 993

## Beschreibung

Die Erfindung betrifft eine Verbundlenkerachse, insbesondere eine Verbundlenkerhinterachse, welche zwei durch einen Querträger verbundene Längslenker umfasst.

Verbundlenkerachsen, insbesondere Verbundlenkerhinterachsen kombinieren die Vorteile eines einzelnen Aufbaus bei geringem Raumgewicht und guten kinematischen Eigenschaften. Der die beiden Längslenker verbindene Querträger wirkt als Torsionsstab, so dass sich bei gleichzeitigem Einfedem eine Längslenkercharakteristik und bei wechselseitigem Einfedern eine Schräglenkercharakteristik ergibt.

Es sind diverse Vorschläge bekannt, wie der Querträger einer Verbundlenkerhinterachse ausgestaltet sein soll, um diesen auf der einen Seite biegesteif, auf der anderen Seite aber auch ausreichend torsionsweich zu gestalten. Dazu zählen beispielsweise Ausführungsformen, wie sie aus der EP 0 149 537 B1 oder der gattungsgemässen DE 297 20 207 U1 hervorgehen.

Die Fertigung dieser Querträger ist jedoch insgesamt zu aufwendig, wodurch die Gestehungskosten einer kompletten Verbundlenkerachse erhöht werden. Daher besteht in der Praxis generell das Bestreben, sowohl die Leistungsfähigkeit als auch die Lebensdauer von Verbundlenkerachsen zu steigern, und zwar möglichst bei gleichzeitiger Kostenreduktion.

Vor diesem Hintergrund liegt der Erfindung, ausgehend vom Stand der Technik die Aufgabe zugrunde, eine Verbundlenkerachse, insbesondere eine Verbundlenkerhinterachse sowohl betriebstechnisch als auch hinsichtlich ihrer Lebensdauer zu verbessern.

Die Lösung dieser Aufgabe besteht nach der Erfindung in einer Verbundlenkerachse nach Anspruch 1, bei welcher der Querträger und/oder der Längsträger partiell gehärtet ist.

Hierdurch erhält die Verbundlenkerachse eine den praktischen Anforderungen in den einzelnen Bauteilbereichen abgestimmte Festigkeit. Die Verbundlenkerachse zeichnet sich durch fließende Kraft und Momentenübergänge aus mit einem dynamischen Kraftfluss ohne Kraftspitzen in kritischen Bauteilkomponenten, insbesondere den Übergangsbereichen vom Querträger zum Längslenker oder den Übergängen vom torsionssteifen zum torsionsweichen Querschnitt des Querträgers. Dementsprechend sind vorzugsweise die Übergangsbereiche bzw. längsseitigen Enden und/oder die Übergänge vom torsionssteifen zum torsionsweichen Querschnitt des Querträgers gehärtet, wie dies Anspruch 2 vorsieht. Hierdurch wird die Steifigkeit bei plastischer Verformung an den Enden und den Übergängen des Querträgers gezielt erhöht. Im mittleren Bereich ist der Querträger dagegen torsionsweich.

Die betrieblich auftretenden Torsions- und Biegekräfte werden von den Längslenkern aufgenommen und in den Querträger übergeleitet, wo sie im torsionsweichen Abschnitt kompensiert werden. Damit besitzt die erfindungsgemäße Torsionslenkerachse ein besonders gutes statisches und dynamisches Lastverhalten und erreicht eine hohe Lebensdauer.

Durch das gezielte Vergüten nach dem Umformen können die guten Umformeigenschaften des Werkstoffs genutzt werden, nach dem Vergüten die hohen mechanischen Werte für die Bauteileigenschaften. Die erzeugte mechanischen Werte und das Werkstoffgefüge werden durch die gesteuerte Erwärmung und die gesteuerte Abkühlung bauteilspezifisch eingestellt. Die Erfindung schafft damit eine Verbundlenkerachse mit maximalier dynamischer Lebensdauer und hoher Knicksteifigkeit.

Der Energieeinsatz bei der Herstellung der qualitativ hochwertigen Verbundlenkerachse ist rationell minimiert. Die partielle Härtung hat weiterhin den Vorteil, dass ein gut umformbarer kostengünstiger Werkstoff zum Einsatz gelangen kann, der nach der Umformung eine gezielt den Anforderungen entsprechende Festigkeit durch Vergütung erhält.

Als besonders effektiv insbesondere unter den Gesichtspunkten der Massenfertigung ist die induktive Härtung anzusehen (Anspruch 3). Die Härtungsoperation ist in den laufenden Betrieb integrierbar. Die Werkstoffeigenschaften werden für die vorgesehene Anwendung durch die Wärmebehandlung eingestellt. Durch Gefügeumwandlung werden Härteschwierigkeit und innere Spannungen beeinflusst. Das induktive Verfahren bietet die Möglichkeit, die Erwärmung gezielt auf eine oder mehrere Partien der Gesamtoberfläche der Verbundlenkerachse zu konzentrieren. Die Erwärmung wird präzise auf die tatsächlich zu härtenden Zonen beschränkt. Die Härteergebnisse sind gleichmäßig und stets reproduzierbar.

Eine Induktionsanlage ist leicht zu automatisieren und gewährleistet einen sauberen Arbeitsvorgang. Wegen des geringen Platzbedarfs kann die Anlage direkt in der Fertigungsstraße aufgestellt werden, wodurch kostspielige Werkstücktransporte entfallen.

Nach Anspruch 4 wird die Härtung unter Schutzgasatmosphäre durchgeführt. Die Schutzgasatmosphäre kann über den gesamten Härteprozeß beibehalten werden, einschließlich des anschließenden Abschreckvorgangs.

Der Vorteil dieser Vorgehensweise besteht in einer Fertigungsvereinfachung, was zu einer Kostenreduktion führt.

Die Schutzgasatmosphäre während der Wärmebehandlung schirmt den oxydationsempfindlichen Stahl vom Sauerstoff und Wasserdampf aus der Luft ab.

Als Folge des Härtens unter kompletter Schutzgasatmosphäre kann der Querträger anschließend lackiert werden ohne eine weitere zusätzliche Oberflächenbehandlung, wie beispielsweise das Strahlen der Oberfläche. Darüber hinaus wird durch die Schutzgasatmosphäre eine zusätzliche Randendkohlung des Querträgers vermieden. Hierdurch kann in der Konsequenz die Lebensdauer des Querträgers und damit die Lebensdauer einer Verbundlenkerachse erhöht werden.

Durch das Härten erhält der Werkstoff des Querträgers eine örtliche oder durchgreifende Härtesteigerung. Durch das Erhitzen und anschließendes Abkühlen (Abschrecken) kann ein klassisches markensichtliches Gefüge des Querträgers in den gehärteten Zonen erreicht werden. Durch die Steuerung des Härteprozesses ist aber auch jedes andere gewünschte Werkstoffgefüge einstellbar. Grundsätzlich kann auch eine Lasererwärmung kann für die Praxis Vorteile mit sich bringen.

Als Werkstoff für den Querträger eigenen sich härtbare Stähle, beispielsweise der Stahl mit der Bezeichnung 22MnB5.

Bei der partiellen Härtung kann durch eine geeignete Prozesssteuerung auch eine gezielte Variation der Härtewerte über die Länge des Querträgers vorgenommen werden, so dass die Härtewerte graduell an- bzw. absteigen und somit die dynamische Haltbarkeit sich gezielt erhöhen.

Gemäß den Merkmalen des Anspruchs 5 weist der Querträger auf dem überwiegenden Teil seiner Länge einen V- oder U-förmigen Querschnitt auf.

Hierdurch kann bei reduziertem Gewicht der Hinterachse die dynamische Haltbarkeit verbessert werden.

Diese Maßnahme trägt zu einer Verbesserung der Fahreigenschaften, insbesondere der Sturz- und Fahrspuränderung beim wechselseitigen Eingliedem und/oder des Einlenkverhaltens der Verbundlenkerhinterachse bei Kurvenfahrten. Zweckmäßigerweise besteht der Querträger aus einem Hohlprofil mit gehärteten Enden und torsionssteifem Querschnitt, wohingegen der Querträger im mittleren Bereich einen torsionsweichen U- oder V-förmigen doppelwandigen Querschnitt aufweist. Die Übergänge vom torsionssteifen zum torsionsweichen Querschnitt sind fließend gestaltet und, wie erwähnt, vergütet. Durch diese Ausführungsform des Querträgers werden die Kräfte in diesem besser verteilt.

Selbstverständlich kann der Querträger auch einwandig und mit vollständig durchgehendem U- bzw. V-Profil ausgeführt sein. Auch eine Stahlkonstruktion aus zwei gefügten Schalen ist möglich. Gegebenenfalls ist eine partielle Ausschäumung in Übergangsbereichen denkbar, wodurch sich eine symbiotische Unterstützung aus gehärtetem Profil und innerer Abstützung durch die Ausschäumung ergibt. Eine solche Verbundlenkerachse erreicht ein hochdynamisches Lastverhalten.

Die Erfindung lässt grundsätzlich verschiedene Ausführungsformen zu. Zur Verdeutlichung des Grundprinzips ist ein Ausführungsbeispiel in der Zeichnung dargestellt.

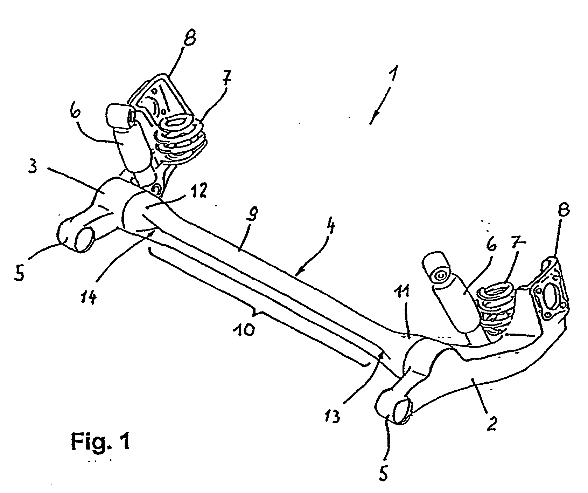

- Figur 1: zeigt eine perspektivische Ansicht einer erfindungsgemäßen Verbundlenkerachse.

Die in der Figur dargestellte Verbundlenkerachse 1 umfasst im wesentlichen zwei radführende Längslenker 2, 3 und einen die beiden Längslenker 2, 3 verbindenen Querträger 4. Die Längslenker 2, 3 sind als Rohrbauteile ausgeführt. An ihren vorderen Enden ist je ein Lagerauge 5 vorgesehen zur elastischen Anlenkung an dem hier nicht dargestellten Fahrzeugaufbau. Zwischen den Längslenkern 2, 3 und dem Fahrzeugaufbau sind femer Stoßdämpfer 6 und Federn 7 angeordnet. Am rückwärtigen Ende der Längslenker 2, 3 sind Aufnahmen 8 zur Verbindung mit jeweils einem Radträger zur Lagerung eines Rads vorgesehen.

Der Querträger 4 besteht aus einem Rohrprofil 9, dessen mittlerer Bereich 10 (Trosionsbereich) einen torsionsweichen Querschnitt und dessen beiden Enden 11, 12 einen torsionssteifen Querschnitt aufweisen. Die Übergänge 13, 14 bzw. Übergangsbereiche vom torsionssteifen zum torsionsweichen Querschnitt sind fließend gestaltet.

Der Querträger 4 ist partielle gezielt im Bereich der Enden 11, 12 und der Übergänge 13, 14 gehärtet. Hierdurch erhält der Werkstoff des Querträgers eine örtliche und durchgreifende Härtesteigerung in diesen Bereichen. Die Verbundlenkerachse 1 kann aus einem gut umformbaren Werkstoff hergestellt sein, beispielsweise einem härtbaren Stahl 22MnB5, welchem anschließend in den hochbelasteten Bereichen eine anforderungsgerechte Festigkeitseigenschaft gegeben wird.

Vorzugsweise erfolgt die partielle Härtung durch induktive Erwärmung mit anschließendem Abschrecken. Hierdurch können gleichmäßige Härtewerte und Härteverläufe reproduzierbar erreicht werden. Vorteile bringt auch eine Härtung unter Schutzgasatmosphäre mit sich. Hierdurch wird die Steifigkeit bei plastischer Verformung an den Enden 11, 12 und Übergängen 13, 14 des Querträgers 4 gezielt erhöht. Im mittleren Bereich 10 ist der Querträger 4 dagegen torsionsweich.

Die erfindungsgemäße Verbundlenkerachse 1 zeichnet sich durch ihr dynamisches Lastverhalten bei hoher Knicksteifigkeit und ihrer sehr hohen Lebensdauer aus.

### Bezugszeichenaufstellung

- 1 -: Verbundlenkerachse
- 2 -: Längslenker
- 3 -: Längslenker
- 4 -: Querträger
- 5 -: Lagerauge
- 6 -: Stoßdämpfer
- 7 -: Federn
- 8 -: Aufnahme
- 9 -: Hohlprofil
- 10 -: Torsionsbereich
- 11 -: Ende
- 12 -: Ende
- 13 -: Übergang
- 14 -: Übergang

## Patentansprüche

1. Verbundlenkerachse für Kraftfahrzeuge, welche zwei durch einen Querträger (4) verbundene Längslenker (2, 3) umfasst, **dadurch gekennzeichnet, dass** der Querträger (4) und/oder die Längslenker (2, 3) partiell gehärtet sind.

2. Verbundlenkerachse nach Anspruch 1, **dadurch gekennzeichnet , dass** die lenkerseitigen Enden (11, 12) des Querträgers (4) und/oder die Übergänge (13, 14) von einem torsionssteifen zu einem torsionsweichen Querschnitt des Querträgers (4) gehärtet sind.

3. Verbundlenkerachse nach Anspruch 1 oder 2, **dadurch gekennzeichnet, dass** sie im partiellen Bereich induktiv gehärtet sind.

4. , Verbundlenkerachse nach einem der Ansprüche 1 bis 3, **dadurch gekennzeichnet, dass** die partiellen Bereiche unter Schutzgas gehärtet sind.

5. Verbundlenkerachse nach einem der Ansprüche 1 bis 4, **dadurch gekennzeichnet, dass** der Querträger (4) auf dem überwiegenden Teil seiner Länge ein oder V- oder U-förmigen Querschnitt besitzt.

## Claims

1. A dead beam axle for motor vehicles, comprising two trailing arms (2, 3) connected by a cross-member (4), **characterised in that** the cross-member (4) and/or the trailing arms (2, 3) are partially hardened.

2. A dead beam axle according to claim 1, **characterised in that** the arm ends (11, 12) of the cross-member (4) and/or the transitions (13, 14) from a torsionally rigid to a torsionally soft cross-section of the cross-member (4) are hardened.

3. A dead beam axle according to claim 1 or 2, **characterised in that** they are inductively hardened in the partial zone.

4. A dead beam axle according to any one of claims 1 to 3, **characterised in that** the partial zones are hardened in a protective gas atmosphere.

5. A dead beam axle according to any one of claims 1 to 4, **characterised in that** the cross-member (4) has a V or U-shaped cross-section over the major part of its length.

## Revendications

1. Essieu à bras oscillants composé pour véhicules automobiles qui comprend deux bras oscillants longitudinaux (2,3) raccordés par une traverse (4), **caractérisé en ce que** la traverse (4) et/ou les bras oscillants longitudinaux (2,3) sont partiellement trempés.

2. Essieu à bras oscillants composé selon la revendication 1, **caractérisé en ce que** les extrémités (11,12) sur le côté du bras de la traverse (4) et/ou les parties de transition (13,14) entre une section transversale rigide en torsion et une section transversale souple en torsion de la traverse (4) sont trempées.

3. Essieu à bras oscillants composé selon la revendication 1 ou 2, **caractérisé en ce qu'**il est trempé par induction dans une zone partielle.

4. Essieu à bras oscillants composé selon l'une des revendications 1 à 3, **caractérisé en ce que** les zones partielles sont trempées sous gaz protecteur.

5. Essieu à bras oscillants composé selon l'une des revendications 1 à 4, **caractérisé en ce que** sur la plus grande partie de sa longueur, la traverse (4) possède une section transversale en forme de V ou en forma de U.
